# EUROPEAN PATENT SPECIFICATION

(11) **EP 1 317 821 B1**
(45) Date of publication and mention of the grant of the patent: **26.03.2008**
(21) Application number: 01965426.8
(22) Date of filing: 10.09.2001
(51) Int. Cl.: H04L 12/56, H04L 12/28, H04B 7/26

(54) **TELECOMMUNICATIONS SYSTEMS**
TELEKOMMUNIKATIONSSYSTEM
SYSTEMES DE TELECOMMUNICATION

(30) Priority: 12.09.2000 GB 0022335; 23.10.2000 GB 0025910
(43) Date of publication of application: 11.06.2003
(73) Proprietor: Vodafone Group PLC, Newbury, Berkshire RG14 1JX (GB)
(72) Inventor: MAYES, Keith, Edward, Hungerford RG17 0LA (GB); VIJITHAN, Rajadurai, Newbury RG14 1SL (GB); ARULKKUMARAN, Arulalingam, Newbury RG14 7PH (GB); LAW, Alan, Reading RG1 4AE (GB)
(74) Representative: Harries, Simon George
(86) International application number: PCT/GB2001/004059
(87) International publication number: WO 2002/023830

(56) References cited:
- GB-A- 2 346 511
- US-A- 5 850 593

## Description

The invention relates to a method of transmitting information in a wireless network between two spaced radio transceiving nodes in a network, one of the nodes being a concentration point and the other node being a selectable one of a plurality of the nodes spatially positioned with reference to the concentration point, by means of a transmission path including a plurality of hops involving at least one intermediate one of the nodes. The invention also relates to a telecommunications system for transmitting information in a wireless network between two spaced radio transceiving nodes in a network, one of the nodes being a concentration point and the other node being a selectable one of a plurality of the nodes spatially positioned with reference to the concentration point, by means of a transmission path including a plurality of hops involving at least one intermediate one of the nodes.

Such a method and such a network are shown for example in GB-A-2 291 564. In this method and network, transmission between a mobile terminal and a base station can take place via a second terminal if the first mobile terminal is out of range of the base station, the selection of the second mobile station being carried out using measurements of signal level at the time of transmission. It is desirable, however, to ensure that such an arrangement, involving multiple hops, does not lead to increased radio interference.

GB-A-2 346 511 also discloses an arrangement where transmission of data between a mobile terminal and a base station can take place via a second terminal. In that publication the transmission of the data via the second terminal is performed in order to reduce the number of base stations required in the network. It is also indicated in this publication that the arrangement allows base station signal strength to be reduced compared to the usual signal strength required in conventional macro cells, and that this minimises the interference to the traffic channels of other base stations. However, a problem with the arrangement described in this publication is that the level of interference near the receiving base station may be high because the base station is a "concentration point" at which transmissions originating from a plurality of mobile terminals are received, which will result in high power concentration in the immediate vicinity of the base station, resulting in a tendency for excessive radio interference thus reducing the overall capacity of the network.

According to the invention, therefore, the method as first set forth above is characterised by the step of constraining the radiated energy dissipation in a hop close to the concentration point to be lower than the radiated energy dissipation in a hop in the same transmission path but further from the concentration point.

According to the invention in a further aspect, the method as first set forth above is characterised by the step of constraining the transmission energy which produces each of the hops in each transmission path such that the level of radio interference tends to be uniform along the length of the path.

According to the invention, also, the system as first set forth above is characterised by constraining means for constraining the radiated energy dissipation in a hop close to the concentration point to be lower than the radiated energy dissipation in a hop in the same transmission path but further from the concentration point.

According to the invention in another aspect, the system as first set forth above is characterised by characterised by constraining means for constraining the transmission energy which produces each of the hops in each transmission path such that the level of radio interference tends to be uniform along the length of the path.

Telecommunications systems and method according to the invention will now be described, by way of example only, with reference to the accompanying diagrammatic drawings in which:
Figure 1 diagrammatically illustrates a problem underlying the invention in one of its aspects;
Figure 2 illustrates the operation of one of the telecommunications systems embodying the invention;
Figures 3A,3B and 3C illustrates principles underlying the telecommunications system embodying the invention;
Figure 4 illustrates the operation of another of the telecommunications systems embodying the invention;
Figure 5 illustrates the operation of a further one of the telecommunications systems embodying the invention; and
Figure 6 is a flow chart illustrating the operational steps employed in one of the telecommunications systems embodying the invention.

The telecommunications systems to be described employ wireless networks, such as cellular telecommunications networks. In the networks to be described, data, normally packet data, is transmitted from a source node in the network to a destination node. The network normally includes one node in the form of a concentration point (CP), which may be a base station, and a plurality of other nodes spaced around the concentration point. The nodes may be radio transceivers of any suitable type. The nodes around the concentration point may, for example, be represented by cellular telephone handsets. The source node may be any of the distributed nodes in the network and the destination node may then be the CP. Instead, the CP may be the source node, transmitting data to a destination node comprising one of the distributed nodes. Data is transmitted by hopping, that is, data is communicated between the source node and the destination node in a series of hops, in which the data is received by an intermediate node and then transmitted to another intermediate node, this process continuing until the data reaches the destination node. Such a hopping technique reduces the transmission power required and thus reduces the possibility of radio interference, as compared with an attempt to transmit the data between the source and the destination nodes by means of a single transmission. In principle, of course, there may be only one intermediate node and thus two hops.

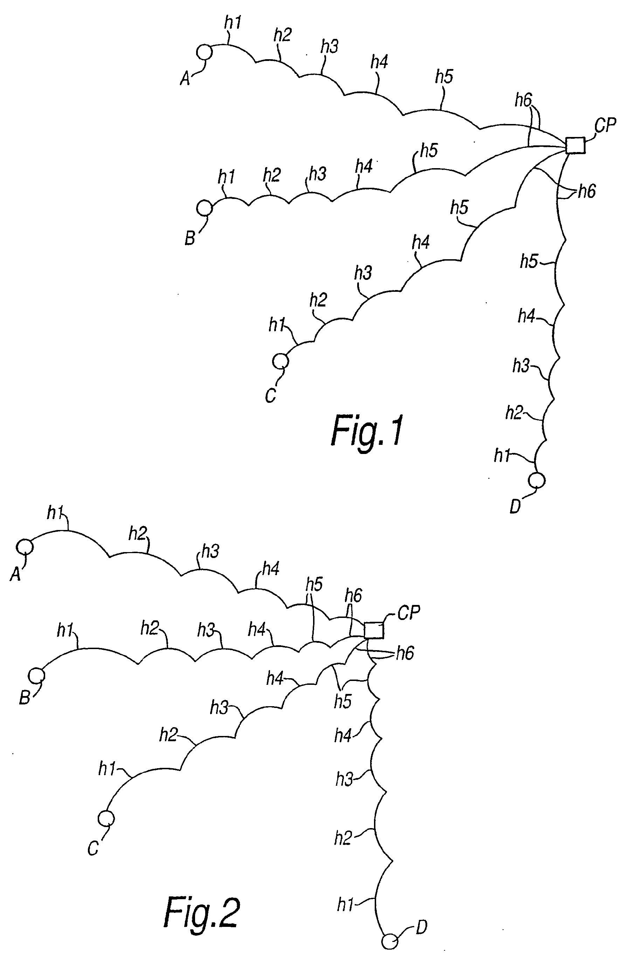

Figure 1 shows a concentration point (CP) around which are arranged a plurality of radio transceiving nodes, such as in the form of a plurality of mobile transceivers (MS), shown at A,B,C and D. It is assumed that each MS wishes to act as a source and to transmit data to the CP. In accordance with known protocols, each MS transmits data to the CP by means of a series of hops shown, for example, at h1,h2,..h3..h6.. Thus h1 starts at the MS A and terminates at the first intermediate MS. This intermediate MS then re-transmits the data, in a second hop h2, to a second intermediate MS. This process continues until the data reaches the CP. For clarity, the intermediate MSs are not shown. The other MSs B,C and D operate in similar fashion.

In a network operating in this way, therefore, each MS involved in the hopping process must select the next MS in the hopping process. If each MS acts to keep-radio interference within the network to a minimum level, it will tend to re-transmit its data in a hop of relatively small length, as shown by the hops h1,h2,h3 in Figure 1, thus involving low transmission power. However, each message to be transmitted to the CP will in general be time-constrained (that is, it must reach the CP within a certain time).
Therefore, as the hopping process continues, the effect of the time constraint will be to increase the lengths of the hops (as shown at h5 and h6), as the system strives to deliver the message at the CP by the correct time. Therefore, there will be a tendency in such a system for the hops to be of small size at the beginning of each data transmission path from the source MS to the CP, the hops becoming progressively larger and being of maximum length in the immediate vicinity of the CP.

Because the CP is, by definition, the concentration point to which a number of MS's are transmitting data, the result will be high power concentration in the immediate vicinity of the CP, resulting in a tendency for excessive radio interference thus reducing the overall capacity of the network.

The invention aims to overcome this problem.

Date transmission in the reverse direction, that is, from the CP to the outlying Mss A,B,C and D do not in general cause a problem. Thus, if they initially start off with a small hop size in the vicinity of the CP, which then progressively increases in order to ensure that the message reaches its destination in due time, the overall power, and thus the radio interference, will be low in the concentrated region around the CP. The increased power causes by the larger hops near the outlying Mss will not be of significance because of the spatial separation of the Mss.

Figure 2 diagrammatically illustrates the operation of a system embodying the invention. Items in Figure 2 corresponding to items in Figure 1 are similarly referenced.

From Figure 2, it will be seen that the system operates by ensuring that each data transmission from the source MS towards the CP proceeds by means of initial relatively large-sized hops which progressively reduce in length as they approach the CP. Therefore, when a number of surrounding MSs are transmitting data to the CP, the data transmission paths ensure that the sizes of the hop in the immediate vicinity of the CP are small. Therefore, the power and the radio interference is significantly reduced, and the capacity of the network is increased accordingly.

According to one feature of the invention, therefore, a protocol is set up for controlling the sizes of the hops involved in transmitting data from a source node to the CP so as to minimise hop length, and thus transmission power, in the vicinity of the CP. In accordance with this protocol, the source node or MS first estimates the distance between itself and the CP. This estimation can be carried out in various ways: for example, the difference could be estimated by measuring the amount of power received at the MS from the CP, assuming a known value for the transmission power and a particular radio path loss model. Alternatively, the distance could be estimated using GPS location data for the CP and the MS. The protocol then decides on the most efficient number and length of hops for the data transmission, based on the estimated distance and on interference measurements. Such a protocol could be stored in each MS, or could be stored at the CP; in the latter case, the decisions would be made by the CP and transmitted to the source node and to the intermediate nodes.

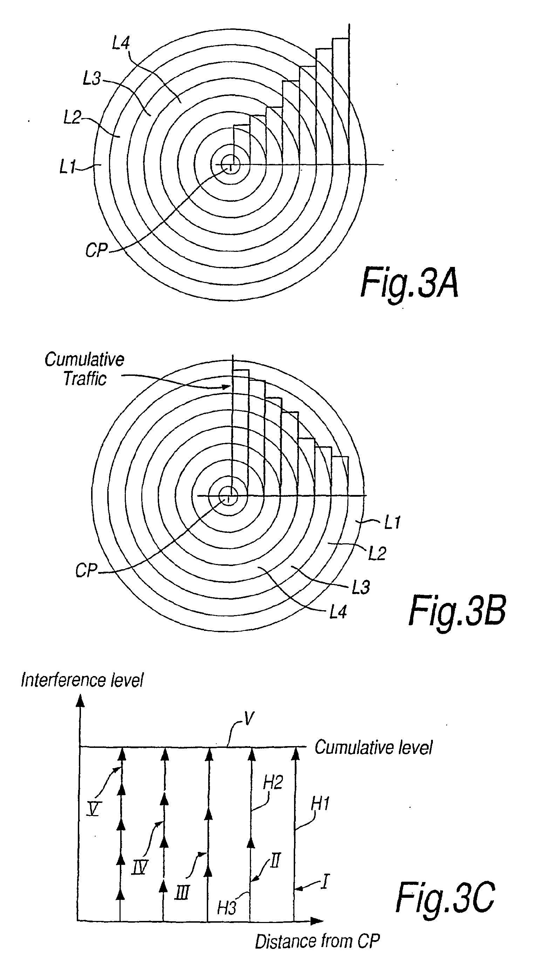

Figure 3A,3B and 3C illustrate the operating principles of such a protocol in more detail.

Figure 3A shows a cell or part of a cell in a telecommunications network which is notionally divided up into circular layers L1,L2,L3 of equal width and with progressively reducing radial distance from the CP. Superimposed on the layers is a graph showing the average number of users (that is, MSs transmitting data at any time) in each layer. Plainly, the number of such users is greater for the larger radius layers than for the smaller radius layers.

Figure 3B shows the layers L1,L2,L3... again, and the CP. Here, there is superimposed a graph showing the cumulative distribution of data transmission traffic from the outlying MSs to the CP, assuming that the data communication is sent through each of the layers. Plainly, cumulative traffic increases progressively in the direction towards the CP.

For optimum transmission speed and minimum radio interference (and thus maximum capacity for the network), the protocol therefore needs to operate as illustrated in Figure 3C. This Figure shows a graph plotting the interference level on the vertical axis and the distance from the CP on the horizontal axis.

The protocol operates by setting a maximum interference level V.

At the maximum distance from the CP, the originating Mss are widely spaced. Therefore, an originating MS can transmit the data to the first intermediate MS in a single hop H1, which produces the maximum radio interference V, as shown at I.

At a position nearer to the CP, shown at II, there will be a smaller number of originating users, but potentially more radio interference because there will be potentially interfering transmissions from the more outward layers of the cell. Therefore, the data transmission how takes place by means of two hops H2 and H3, each of shorter lengths than the hop H1. The total interference produced is again at the level V.

As is shown at III, IV and V in Figure 3C, the number of hops progressively increases, and their sizes progressively decrease, for positions closer to the CP. However, in each case the total cumulative level of interference which is produced is maintained constant at V. Therefore, the protocol advantageously operates by adjusting the hop length to maintain the cumulative level of interference constant.

Although in general the hop lengths will be smaller at positions closer to the CP than at positions further away, the important factor is the level of potential interference which will be a function of the power or energy dissipated in the hop. This will depend, at least to some extent, on the local radio propagation characteristics. For a given level of radiated energy (which determines potential interference), the actual permitted hop length can be greater where the radio propagation characteristics are good than where those characteristics are bad.

The principles illustrated in Figures 3A,3B and 3C can be implemented by notionally dividing the cell into circular regions around the CP which are sized so that their radiusses increase to a disproportionately greater extent further from the CP, and then arranging for each data hop to start in one region and then in the next region.

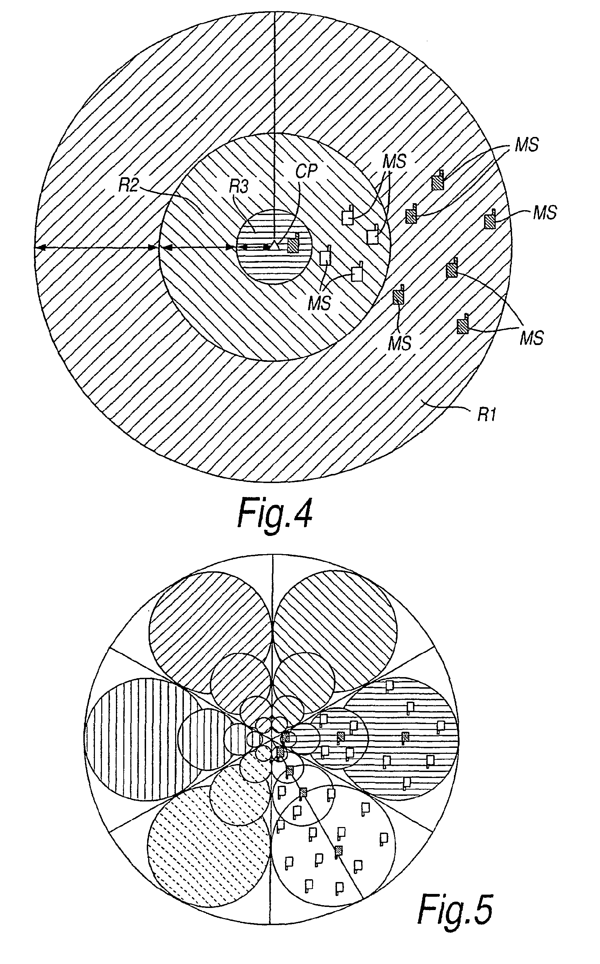

Figure 4 shows such an arrangement in a cell of a cellular telephone system, with regions R1,R2 and R3 arranged around the concentration point CP. The inner and outer radial limits for each such region are spaced apart by a greater distance than the inner and outer radial limits for of the next region closer to the CP.

Within each region, there will be a respective plurality of MSs. Assuming that the MSs are distributed within the cell substantially evenly, there will be more MSs in the outer regions than in the regions closer to the CP. The MSs within each region are given a particular identifying "tag", corresponding to the region in which they are situated. For example, tags of different "colour" could be attached, with MSs in regions R1,R2 and R3 being respectively given red, yellow and green tags?

If the protocol constraining the hopping process is such that data has to take place by means of successive hops each of which starts with a node or MS in one region and ends at an MS or node in the next region, it follows that data transmission starting from an MS in an outer region will take place by means of hops of progressively shorter length in the direction towards the CP. In this way, therefore, an approximation to the required constant cumulative level of interference V shown in Figure 3C will be achieved. Obviously, this will not be achieved exactly because the length of the hops between adjacent regions in Figure 4 will depend on the positions within their respective regions of the MSs at the beginning and end of each hop.

Figure 5 shows a more complex arrangement of where regions close to the CP have a small size, the size disproportionately increasing as the distance from the regions increases from the CP. Again, the protocol ensures that data transmission takes place by means of hops starting in one region and ending in the next, so that the hops have progressively shorter length as they approach the CP.

It will also be appreciated that, with the arrangements described, data transmission from the CP towards an outlying MS takes place by means of short-length hops which progressively increase in length. Again, therefore, radio interference is minimised.

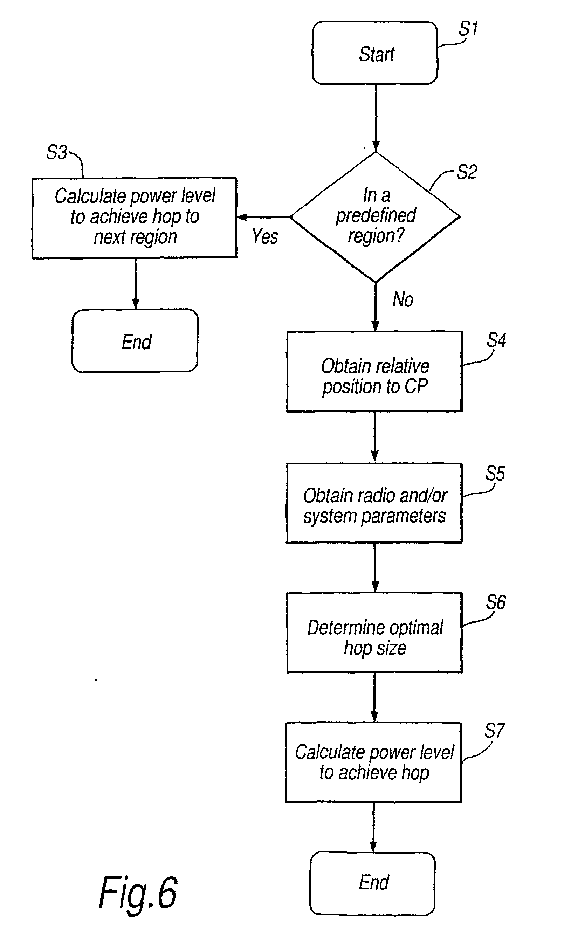

Figure 6 shows a flow chart illustrating steps which can take place in implementing the arrangements illustrated.

At step S1, the protocol responds to receipt of data at a particular node which is to be transmitted towards the CP by means of a hop. In principle, this node can be the originating MS or an intermediate node.

At step S2, the protocol determines whether the node is a tagged node in one of a series of regions such as shown in Figure 4 or Figure 5. If the node is determined to be such a node, then it is merely necessary for the protocol to calculate the power level in order to achieve a hop to a node in the next region (step S4). As explained, in connection with Figures 4 and 5, the respective sizes of the regions ensures that the hop will have the correct length.

If at step S2 it is determined that the node does not lie in a particular region as illustrated in Figure 4 or 5, at step S4 the protocol determines the position of the node relative to the CP (e.g. using GPS information or power loss information as described above).

At step S5, the system obtains the "radio and/or system parameters". At step S6, the protocol uses this information to determine the optimal size of the next hop. Finally, at step S7 the protocol calculates the required power level to achieve this hop.

In summary, therefore, the network and systems described aim to produce an even distribution of radio interference over a particular geographical area and thus provide optimum capacity for any interference-limited system.

Although the foregoing description has referred to "data", the networks, systems and methods described can be used for the transmission of information of any kind including for voice communication.

## Claims

1. A method of transmitting information in a wireless network between two spaced radio transceiving nodes (A,B,C,D;CP) in a network, one of the nodes being a concentration point (CP) and the other node being a selectable one of a plurality of the nodes (A,B,C,D) spatially positioned with reference to the concentration point (CP), by means of a transmission path including a plurality of hops (hl,h2....h6) involving at least one intermediate one of the nodes (A,B,C,D), **characterised by** the step of constraining the radiated energy dissipation in a hop (e.g. h6) close to the concentration point (CP) to be lower than the radiated energy dissipation in a hop (e.g. h1) in the same transmission path but further from the concentration point (CP).

2. A method according to claim 1, **characterised in that** the constraining step includes the step of dynamically determining the lengths of the hops (h1,h2...h6) in a said transmission path in dependence on the radio properties in and adjacent to the transmission path.

3. A method according to claim 2, **characterised in that** the constraining step includes the step of dynamically determining the lengths of the hops (h1,h2....h6) in a said transmission path in dependence on the distance from the source node (A,B,C,D) to the concentration point (CP).

4. A method according to any preceding claim, **characterised in that** the length of a hop (e.g. h6) close to the concentration point (CP) is shorter than the length of a hop in the same transmission path but further from the concentration point (CP).

5. A method according to claim 4, **characterised in that** the constraining step includes the step of defining a plurality of spatial regions (R1,R2,R3), a first one (e.g. R1) of which includes the source node, a second one (e.g. R3) of which includes the concentration point (CP) and at least a third one (R2) of which includes an intermediate node, at least the first and third regions (R1,R3) including others of the nodes, the regions successively closer to the concentration point being of successively reduced size, and by the step of defining each hop to start in one of the regions and to end in an adjacent one of the regions.

6. A method according to claim 5, **characterised in that** the regions (R1,R2,R3) are arranged around the concentration point (CP).

7. A method of transmitting information in a wireless network between two spaced radio transceiving nodes (A,B,C,D;CP) in the network, one of the nodes being a concentration point (CP) and the other node being a selectable one of a plurality of the nodes (A,B,C,D) spatially positioned with reference to the concentration point (CP), by means of a transmission path including a plurality of hops (h1,h2...h6) involving at least one intermediate one of the nodes (A,B,C,D), **characterised by** the step of constraining the transmission energy which produces each of the hops (h1,h2...h6) in each transmission path such that the level of radio interference tends to be uniform along the length of the path.

8. A method according to claim 7, **characterised in that** in each transmission path the hops successively closer to the concentration point have successively reduced lengths.

9. A telecommunications system for transmitting information in a wireless network between two spaced radio transceiving nodes (A,B,C,D;CP) in a network, one of the nodes being a concentration point (CP) and the other node being a selectable one of a plurality of the nodes (A,B,C,D) spatially positioned with reference to the concentration point (CP), by means of a transmission path including a plurality of hops (h1,h2....h6) involving at least one intermediate one of the nodes (A,B,C,D), **characterised by** constraining means for constraining the radiated energy dissipation in a hop (e.g. h6) close to the concentration point (CP) to be lower than the radiated energy dissipation in a hop (e.g. h1) in the same transmission path but further from the concentration point (CP).

10. A system according to claim 9, **characterised in that** the constraining means comprises means for dynamically determining the lengths of the hops (h1,h2....h6) in a said transmission path in dependence on the radio properties in and adjacent to the transmission path.

11. A system according to claim 10, **characterised in that** the constraining means comprises means for dynamically determining the lengths of the hops (h1,h2....h6) in a said transmission path in dependence on the distance from the source node (A,B,C,D) to the concentration point (CP).

12. A system according to any one of claims 9 to 11, **characterised in that** the constraining means constrains the length of a hop (e.g. h6) close to the concentration point (CP) to be shorter than the length of a hop (e.g. h1) in the same transmission path but further from the concentration point.

13. A system according to claim 12, **characterised in that** the constraining means comprises means for defining a plurality of spatial regions (R1,R2,R3), a first one (R1) of which includes the source node, a second one (R3) of which includes the concentration point (CP) and at least a third one (R2) of which includes an intermediate node, at least the first and third regions including others of the nodes, the regions successively closer to the concentration point being of successively reduced size, and means for defining each hop to start in one of the regions and to end in an adjacent one of the regions.

14. A system according to claim 13, **characterised in that** the regions (R1,R2,R3) are concentrically arranged around the concentration point (CP).

15. A telecommunications system for transmitting data in a wireless network between two spaced radio transceiving nodes (A,B,C,D;CP) in the network, one of the nodes being a concentration point (CP) and the other node being a selectable one of a plurality of the nodes (A,B,C,D) spatially positioned with reference to the concentration point (CP), by means of a transmission path including a plurality of hops (h1,h2....h6) involving at least one intermediate one of the nodes (A,B,C,D), **characterised by** constraining means for constraining the transmission energy which produces each of the hops (h1,h2.....h6) in each transmission path such that the level of radio interference tends to be uniform along the length of the path.

16. A system according to claim 15, **characterised in that** each transmission path the hops successively closer to the concentration point have successively reduced lengths.

## Patentansprüche

1. Verfahren zum Übertragen von Informationen in einem drahtlosen Netzwerk zwischen zwei beabstandeten Funksende-/-empfangsknoten (A,B,C,D;CP) in einem Netzwerk, wobei einer der Knoten ein Konzentrationspunkt (CP) ist und der andere Knoten aus einer Mehrzahl der Knoten (A,B,C,D) ausgewählt werden kann, die räumlich mit Bezug auf den Konzentrationspunkt (CP) positioniert sind, über einen Übertragungsweg mit einer Mehrzahl von Funkfeldern (h1,h2....h6) unter Beteiligung von wenigstens einem Zwischenknoten aus den Knoten (A,B,C,D), **gekennzeichnet durch** den Schritt des Beschränkens der Strahlungsenergie-Dissipation in einem Funkfeld (z.B. h6) nahe dem Konzentrationspunkt (CP) so, dass sie niedriger ist als die Strahlungsenergie-Dissipation in einem Funkfeld (z.B. h1) auf demselben Übertragungsweg, aber weiter vom Konzentrationspunkt (CP) entfernt.

2. Verfahren nach Anspruch 1, **dadurch gekennzeichnet, dass** der Beschränkungsschritt den Schritt des dynamischen Ermittelns der Längen der Funkfelder (h1,h2....h6) auf einem genannten Übertragungsweg in Abhängigkeit von den Funkeigenschaften auf und neben dem Übertragungsweg beinhaltet.

3. Verfahren nach Anspruch 2, **dadurch gekennzeichnet, dass** der Beschränkungsschritt den Schritt des dynamischen Ermittelns der Längen der Funkfelder (h1,h2....h6) auf einem genannten Übertragungsweg in Abhängigkeit von der Distanz vom Ursprungsknoten (A,B,C,D) zum Konzentrationspunkt (CP) beinhaltet.

4. Verfahren nach einem der vorherigen Ansprüche, **dadurch gekennzeichnet, dass** die Länge eines Funkfeldes (z.B. h6) nahe am Konzentrationspunkt (CP) geringer ist als die Länge eines Funkfelds auf dem selben Übertragungsweg, aber weiter vom Konzentrationspunkt (CP) entfernt.

5. Verfahren nach Anspruch 4, **dadurch gekennzeichnet, dass** der Beschränkungsschritt den Schritt des Definierens einer Mehrzahl von räumlichen Regionen (R1,R2,R3) beinhaltet, von denen eine erste (z.B. R1) den Ursprungsknoten beinhaltet, eine zweite (z.B. R3) den Konzentrationspunkt (CP) beinhaltet und wenigstens eine dritte (R2) einen Zwischenknoten beinhaltet, wobei wenigstens die erste und die dritte Region (R1,R3) andere der Knoten beinhalten, wobei die Regionen, die sukzessiv näher am Konzentrationspunkt liegen, sukzessiv kleiner werden, und durch den Schritt des Definierens jedes Funkfeldes, so dass es in einer der Regionen beginnt und in einer der benachbarten Regionen endet.

6. Verfahren nach Anspruch 5, **dadurch gekennzeichnet, dass** die Regionen (R1,R2,R3) um den Konzentrationspunkt (CP) herum angeordnet sind.

7. Verfahren zum Übertragen von Informationen in einem drahtlosen Netzwerk zwischen zwei beabstandeten Funksende-/-empfangsknoten (A,B,C,D;CP) in dem Netzwerk, wobei einer der Knoten ein Konzentrationspunkt (CP) ist und der andere Knoten aus einer Mehrzahl der Knoten (A,B,C,D) ausgewählt werden kann, die räumlich mit Bezug auf den Konzentrationspunkt (CP) positioniert sind, über einen Übertragungsweg, der eine Mehrzahl von Funkfeldern (h1,h2...h6) unter Beteiligung von wenigstens einem Zwischenknoten aus den Knoten (A,B,C,D) beinhaltet, **gekennzeichnet durch** den Schritt des Beschränkens der Übertragungsenergie, die jedes der Funkfelder (h1,h2...h6) auf jedem Übertragungsweg erzeugt, so dass der Funkstörpegel dazu neigt, über die Länge des Weges gleichförmig zu sein.

8. Verfahren nach Anspruch 7, **dadurch gekennzeichnet, dass** auf jedem Übertragungsweg die sukzessiv näher am Konzentrationspunkt liegenden Funkfelder sukzessiv geringere Längen haben.

9. Telekommunikationssystem zum Übertragen von Informationen in einem drahtlosen Netzwerk zwischen zwei beabstandeten Funksende-/-empfangsknoten (A,B,C,D;CP) in einem Netzwerk, wobei einer der Knoten ein Konzentrationspunkt (CP) ist und der andere Knoten aus einer Mehrzahl der Knoten (A,B,C,D) ausgewählt werden kann, die räumlich mit Bezug auf den Konzentrationspunkt (CP) positioniert sind, über einen Übertragungsweg, der eine Mehrzahl von Funkfeldern (h1,h2....h6) unter Beteiligung von wenigstens einem Zwischenknoten aus den Knoten (A,B,C,D) beinhaltet, **gekennzeichnet durch** Beschränkungsmittel zum Beschränken der Strahlungsenergie-Dissipation in einem Funkfeld (z.B. h6) nahe am Konzentrationspunkt (CP), so dass sie geringer ist als die Strahlungsenergie-Dissipation in einem Funkfeld (z.B. h1) auf demselben Übertragungsweg, aber weiter vom Konzentrationspunkt (CP) entfernt.

10. System nach Anspruch 9, **dadurch gekennzeichnet, dass** das Beschränkungsmittel Mittel zum dynamischen Ermitteln der Längen der Funkfelder (h1,h2....h6) auf dem genannten Übertragungsweg in Abhängigkeit von den Funkeigenschaften auf und neben dem Übertragungsweg umfasst.

11. System nach Anspruch 10, **dadurch gekennzeichnet, dass** das Beschränkungsmittel Mittel zum dynamischen Ermitteln der Längen der Funkfelder (h1,h2 .... h6) auf dem genannten Übertragungsweg in Abhängigkeit von der Distanz vom Ursprungsknoten (A,B,C,D) zum Konzentrationspunkt (CP) umfasst.

12. System nach einem der Ansprüche 9 bis 11, **dadurch gekennzeichnet, dass** das Beschränkungsmittel die Länge eines Funkfeldes (z.B. h6) nahe am Konzentrationspunkt (CP) so beschränkt, dass es kürzer ist als ein Funkfeld (z.B. h1) auf demselben Übertragungsweg, aber weiter vom Konzentrationspunkt entfernt.

13. System nach Anspruch 12, **dadurch gekennzeichnet, dass** das Beschränkungsmittel Mittel zum Definieren einer Mehrzahl von räumlichen Regionen (R1,R2,R3) umfasst, von denen eine erste (R1) den Ursprungsknoten beinhaltet, eine zweite (R3) den Konzentrationspunkt (CP) beinhaltet und wenigstens eine dritte (R2) einen Zwischenknoten beinhaltet, wobei wenigstens die erste und die dritte Region andere der Knoten beinhalten, wobei die Regionen, die sukzessiv näher am Konzentrationspunkt liegen, eine sukzessiv geringere Größe haben, und Mittel zum Definieren jedes Funkfeldes so, dass es in einer der Regionen beginnt und in einer der benachbarten Regionen endet.

14. System nach Anspruch 13, **dadurch gekennzeichnet, dass** die Regionen (R1,R2,R3) konzentrisch um den Konzentrationspunkt (CP) herum angeordnet sind.

15. Telekommunikationssystem zum Übertragen von Daten in einem drahtlosen Netzwerk zwischen zwei beabstandeten Funksende-/-empfangsknoten (A,B,C,D;CP) in dem Netzwerk, wobei einer der Knoten ein Konzentrationspunkt (CP) ist und der andere Knoten aus einer Mehrzahl der Knoten (A,B,C,D) ausgewählt werden kann, die räumlich mit Bezug auf den Konzentrationspunkt (CP) positioniert sind, über einen Übertragungsweg mit einer Mehrzahl von Funkfeldern (h1,h2....h6) unter Beteiligung von wenigstens einem Zwischenknoten aus den Knoten (A,B,C,D), **gekennzeichnet durch** Beschränkungsmittel zum Beschränken der Übertragungsenergie, die jedes der Funkfelder (h1,h2....h6) auf jedem Übertragungsweg erzeugt, so dass der Funkstörpegel dazu neigt, über die Länge des Weges gleichförmig zu sein.

16. System nach Anspruch 15, **dadurch gekennzeichnet, dass** alle Übertragungswege der Funkfelder, die sukzessiv näher am Konzentrationspunkt liegen, sukzessiv geringere Längen haben.

## Revendications

1. Procédé de transmission d'informations dans un réseau sans fil entre deux noeuds radio émetteurs-récepteurs espacés l'un de l'autre (A, B, C, D ; CP) dans un réseau, l'un des noeuds étant un point de concentration (CP) alors que l'autre noeud est un noeud sélectionnable parmi une pluralité de noeuds (A, B, C, D) positionnés dans un plan spatial par rapport au point de concentration (CP), à l'aide d'un trajet de transmission comportant une pluralité de bonds (h1, h2, ...... h6) faisant intervenir au moins un noeud intermédiaire parmi les noeuds (A, B, C, D), **caractérisé par** l'étape consistant à limiter la dissipation de l'énergie rayonnée dans un bond (par exemple h6) à proximité du point de concentration (CP) pour que celle-ci soit inférieure à la dissipation de l'énergie rayonnée dans un bond (par exemple h1) dans le même trajet de transmission, mais situé à une distance plus éloignée par rapport au point de concentration (CP).

2. Procédé, selon la revendication 1, **caractérisé en ce que** l'étape de limitation englobe l'étape consistant à déterminer de façon dynamique les longueurs des bonds (h1, h2, ...... h6) dans un dit trajet de transmission, en fonction des propriétés radio présentes dans le trajet de transmission et adjacentes au trajet de transmission.

3. Procédé, selon la revendication 2, **caractérisé en ce que** l'étape de limitation englobe l'étape consistant à déterminer de façon dynamique les longueurs des bonds (h1, h2, ...... h6) dans un dit trajet de transmission, en fonction de la distance entre le noeud source (A, B, C, D) et le point de concentration (CP).

4. Procédé, selon l'une quelconque des revendications précédentes, **caractérisé en ce que** la longueur d'un bond (par exemple h6) à proximité du point de concentration (CP) est plus courte que la longueur d'un bond dans le même trajet de transmission mais situé à une distance plus éloignée par rapport au point de concentration (CP).

5. Procédé, selon la revendication 4, **caractérisé en ce que** l'étape de limitation englobe l'étape consistant à définir une pluralité de zones spatiales (R1, R2, R3), une première de ces zones (par exemple R1) comportant le noeud source, une deuxième de ces zones (par exemple R3) comportant le point de concentration (CP), et une troisième au moins de ces zones (R2) comportant un noeud intermédiaire, alors que la première et la troisième zones au moins (R1, R3) comportent d'autres noeuds, les zones successivement plus proches du point de concentration ayant une taille successivement réduite, et par l'étape consistant à définir chaque bond pour que celui-ci commence dans l'une des zones et se termine dans une zone adjacente des zones.

6. Procédé, selon la revendication 5, **caractérisé en ce que** les zones (R1, R2, R3) sont disposées autour du point de concentration (CP).

7. Procédé de transmission d'informations dans un réseau sans fil entre deux noeuds radio émetteurs-récepteurs espacés l'un de l'autre (A, B, C, D ; CP) dans le réseau, l'un des noeuds étant un point de concentration (CP) alors que l'autre noeud est un noeud sélectionnable parmi une pluralité de noeuds (A, B, C, D) positionnés dans un plan spatial par rapport au point de concentration (CP), à l'aide d'un trajet de transmission comportant une pluralité de bonds (h1, h2, ...... h6) faisant intervenir au moins un noeud intermédiaire parmi les noeuds (A, B, C, D), **caractérisé par** l'étape consistant à limiter l'énergie de transmission qui produit chacun des bonds (h1, h2, ...... h6) dans chaque trajet de transmission de sorte que le niveau des interférences radio a tendance à être uniforme le long de la longueur du trajet.

8. Procédé, selon la revendication 7, **caractérisé en ce que** dans chaque trajet de transmission les bonds successivement plus proches du point de concentration ont des longueurs successivement réduites.

9. Système de télécommunications servant à transmettre des informations dans un réseau sans fil entre deux noeuds radio émetteurs-récepteurs espacés l'un de l'autre (A, B, C, D ; CP) dans un réseau, l'un des noeuds étant un point de concentration (CP) alors que l'autre noeud est un noeud sélectionnable parmi une pluralité de noeuds (A, B, C, D) positionnés dans un plan spatial par rapport au point de concentration (CP), à l'aide d'un trajet de transmission comportant une pluralité de bonds (h1, h2, ...... h6) faisant intervenir au moins un noeud intermédiaire parmi les noeuds (A, B, C, D), **caractérisé par** des moyens de limitation destinés à limiter la dissipation de l'énergie rayonnée dans un bond (par exemple h6) à proximité du point de concentration (CP) pour que celle-ci soit inférieure à la dissipation de l'énergie rayonnée dans un bond (par exemple h1) dans le même trajet de transmission, mais situé à une distance plus éloignée par rapport au point de concentration (CP).

10. Système, selon la revendication 9, **caractérisé en ce que** les moyens de limitation englobent des moyens servant à déterminer de façon dynamique les longueurs des bonds (h1, h2, ...... h6) dans un dit trajet de transmission, en fonction des propriétés radio présentes dans le trajet de transmission et adjacentes au trajet de transmission.

11. Système, selon la revendication 10, **caractérisé en ce que** les moyens de limitation englobent des moyens servant à déterminer de façon dynamique les longueurs des bonds (h1, h2, ...... h6) dans un dit trajet de transmission en fonction de la distance entre le noeud source (A, B, C, D) et le point de concentration (CP).

12. Procédé, selon l'une quelconque des revendications 9 à 11, **caractérisé en ce que** les moyens de limitation limitent la longueur d'un bond (par exemple h6) à proximité du point de concentration (CP) pour que celle-ci soit plus courte que la longueur d'un bond (par exemple h1) dans le même trajet de transmission mais situé à une distance plus éloignée par rapport au point de concentration.

13. Système, selon la revendication 12, **caractérisé en ce que** les moyens de limitation englobent des moyens servant à définir une pluralité de zones spatiales (R1, R2, R3), une première (R1) de ces zones comportant le noeud source, une deuxième (R3) de ces zones comportant le point de concentration (CP), et une troisième (R2) au moins de ces zones comportant un noeud intermédiaire, alors que la première et la troisième zones au moins comportent d'autres noeuds, les zones successivement plus proches du point de concentration ayant une taille successivement réduite, ainsi que des moyens servant à définir chaque bond pour que celui-ci commence dans l'une des zones et se termine dans une zone adjacente des zones.

14. Système, selon la revendication 13, **caractérisé en ce que** les zones (R1, R2, R3) sont disposées de façon concentrique autour du point de concentration (CP).

15. Système de télécommunications servant à transmettre des données dans un réseau sans fil entre deux noeuds radio émetteurs-récepteurs espacés l'un de l'autre (A, B, C, D ; CP) dans le réseau, l'un des noeuds étant un point de concentration (CP) alors que l'autre noeud est un noeud sélectionnable parmi une pluralité de noeuds (A, B, C, D) positionnés dans un plan spatial par rapport au point de concentration (CP), à l'aide d'un trajet de transmission comportant une pluralité de bonds (h1, h2, ...... h6) faisant intervenir au moins un noeud intermédiaire parmi les noeuds (A, B, C, D), **caractérisé par** des moyens de limitation destinés à limiter l'énergie de transmission qui produit chacun des bonds (h1, h2, ...... h6) dans chaque trajet de transmission de sorte que le niveau des interférences radio a tendance à être uniforme le long de la longueur du trajet.

16. Système, selon la revendication 15, **caractérisé en ce que** dans chaque trajet de transmission les bonds successivement plus proches du point de concentration ont des longueurs successivement réduites.
